# EUROPEAN PATENT APPLICATION

(11) **EP 2 902 197 A1**
(43) Date of publication of application: **05.08.2015**
(21) Application number: 13840843.0
(22) Date of filing: 27.09.2013
(51) Int. Cl.: B41C 1/05, B41N 1/12

(54) **METHOD FOR MANUFACTURING CYLINDRICAL ORIGINAL PRINTING PLATE AND METHOD FOR MANUFACTURING CYLINDRICAL PRINTING PLATE**

(30) Priority: 27.09.2012 JP 2012215223
(71) Applicant: FUJIFILM Corporation, Tokyo 106-8620 (JP)
(72) Inventor: ARIMURA Keisuke, Haibara-gun Shizuoka 421-0396 (JP)
(74) Representative: Hoffmann Eitle
(86) International application number: PCT/JP2013/076208
(87) International publication number: WO 2014/051028

(57) **Abstract**

To provide a production process that can easily produce a cylindrical printing plate precursor having excellent thickness precision.

A process for producing a cylindrical printing plate precursor, comprising in this order
(i) a preparation step of preparing a sheet-shaped resin,
(ii) a disposition step of disposing on the outer periphery of a cylindrical support a cylindrical resin formed into a cylindrical shape by joining opposite end parts of the sheet-shaped resin, and
(iii) a shrinkage step of shrinking the cylindrical resin so as to be in intimate contact with the cylindrical support.

## Description

The present invention relates to a process for producing a cylindrical printing plate precursor, and and a process for making a cylindrical printing plate.

In recent years, when making a resin relief printing plate for flexographic printing, dry offset printing, and letterpress printing or when carrying out a surface treatment such as an embossing treatment, the so-called 'direct engraving CTP method', in which a printing plate is made by directly engraving a relief-forming layer by means of a laser, has often been proposed. In this method, a flexographic plate precursor is directly irradiated with a laser, thermal decomposition and vaporization are caused by photothermal conversion, and a recess part is formed. Unlike a case in which a relief is formed using an original image film, the direct engraving CTP method enables the relief shape to be freely controlled. Because of this, when forming an image such as an outline character, it is possible to engrave that region more deeply than another region, or in a fine halftone image, engraving with a shoulder can be carried out while taking into consideration resistance to printing pressure. The laser used in this method is usually a high output carbon dioxide laser. In the case of a carbon dioxide laser, all organic compounds can absorb irradiation energy and convert it to heat. On the other hand, inexpensive small-sized semiconductor lasers have been developed, and since they employ visible light and near-infrared light, it becomes necessary to absorb this laser light and convert it to heat.

A relief printing plate is usually used in the form of a sheet, but the use of a relief printing plate in the form of continuous cylinder has specific applications and advantages. Since a continuous cylindrical printing plate can easily print its design without print-through at a flat plate joint, it is suitable for flexographic printing of continuous designs in the case of wallpaper, decorations, wrapping paper for presents, and applications in which strict registration is required. Furthermore, such a continuous print element is suitable for being mounted on laser exposure equipment, and precise registration can be achieved by using it instead of a drum or mounting it on a drum for laser exposure. Moreover, the precision of registration of a multi-color image can be much enhanced and be made easy by mounting a cylindrical printing plate on a printer.

With regard to formation of a jointless continuous cylindrical printing plate, for example, Patent Document 1 describes a process for producing a seamless sleeve body for printing, comprising (a) a coating step of supplying a predetermined amount of a liquid photosensitive resin to a rotating cylinder outer peripheral face, (b) an exposure step of carrying out photocuring while making the coating thickness of the liquid photosensitive resin uniform, and (c) a posttreatment step of removing uncured liquid photosensitive resin remaining on the surface of the photocured seamless sleeve-shaped resin body, wherein the exposure step (b) is carried out in two or more sessions.
Patent Document 1 JP-A-2003-241397 (JP-A denotes a Japanese unexamined patent application publication)

The process described in Patent Document 1 has the problem that, when coating a rotating cylindrical object with a liquid at a uniform thickness, the liquid easily flows due to gravity or centrifugal force, making it difficult to maintain the shape, and coating with a uniform thickness at high precision is impossible.

It is an object of the present invention to provide a production process that can easily produce a cylindrical printing plate precursor having excellent thickness precision.

In light of the above circumstances, as a result of an intensive investigation by the present inventors in order to solve the above problems, it has been found that the problems can be solved by a process for producing a cylindrical printing plate precursor comprising, in this order, (i) a preparation step of preparing a sheet-shaped resin, (ii) a disposition step of disposing on the outer periphery of a cylindrical support a cylindrical resin formed into a cylindrical shape by joining opposite end parts of the sheet-shaped resin, and (iii) a shrinkage step of shrinking the cylindrical resin so as to be in intimate contact with the cylindrical support, and the present invention has thus been accomplished.

The problems of the present invention described above have been solved by the means described in following <1> and <14>. Preferred embodiments <2> to <13> will also be described below.
<1> A process for producing a cylindrical printing plate precursor, comprising in this order
   (i) a preparation step of preparing a sheet-shaped resin,
   (ii) a disposition step of disposing on the outer periphery of a cylindrical support a cylindrical resin formed into a cylindrical shape by joining opposite end parts of the sheet-shaped resin, and
   (iii) a shrinkage step of shrinking the cylindrical resin so as to be in intimate contact with the cylindrical support,
<2> the process for producing a cylindrical printing plate precursor according to <1>, wherein joining of opposite end parts in the disposition step is carried out by thermal fusion,
<3> the process for producing a cylindrical printing plate precursor according to <1> or <2>, wherein the shrinkage ratio of the cylindrical resin in the shrinkage step is at least 0.1% but no greater than 10% of the circumference of the cylinder.
<4> the process for producing a cylindrical printing plate precursor according to any one of <1> to <3>, wherein the sheet-shaped resin and the cylindrical resin comprise a thermoplastic elastomer,
<5> the process for producing a cylindrical printing plate precursor according to any one of <1> to <4>, wherein the sheet-shaped resin comprises thermally fusible particles,
<6> the process for producing a cylindrical printing plate precursor according to any one of Claims <1> to <5>, wherein the cylindrical resin in the shrinkage step comprises a solvent, and said shrinkage is shrinkage due to removal of the solvent,
<7> the process for producing a cylindrical printing plate precursor according to <6>, wherein the content of the solvent in the cylindrical resin is 1 to 30 mass% relative to the total solids content of the cylindrical resin,
<8> the process for producing a cylindrical printing plate precursor according to any one of <1> to <5>, wherein the cylindrical resin in the shrinkage step comprises an ethylenically unsaturated compound and a radical polymerization initiator, and said shrinkage is volume shrinkage due to radical polymerization,
<9> the process for producing a cylindrical printing plate precursor according to <8>, wherein the ethylenically unsaturated compound comprises a polyfunctional ethylenically unsaturated compound,
<10> the process for producing a cylindrical printing plate precursor according to any one of <1> to <9>, wherein the sheet-shaped resin and the cylindrical resin have a thickness of at least 0.05 mm but no greater than 10 mm,
<11> the process for producing a cylindrical printing plate precursor according to any one of <1> to <10>, wherein the sheet-shaped resin and the cylindrical resin comprise a photothermal conversion agent,
<12> the process for producing a cylindrical printing plate precursor according to any one of <1> to <11>, wherein the cylindrical printing plate precursor is a cylindrical printing plate precursor for laser engraving,
<13> the process for producing a cylindrical printing plate precursor according to any one of <1> to <12>, wherein the cylindrical printing plate precursor is a cylindrical flexographic printing plate precursor,
<14> a process for making a cylindrical printing plate, comprising an engraving step of laser engraving the cylindrical resin of a cylindrical printing plate precursor produced by the process according to any one of <1> to <13> to thus form a relief layer.

In accordance with the present invention, there can be provided a production process that can easily produce a cylindrical printing plate precursor having excellent thickness precision.

The present invention is explained in detail below. The present invention is not limited to embodiments below and may be carried out in a variety of ways within the scope thereof.

In the present specification, the notation 'xx to yy' means a numerical range that includes xx and yy.

'(Meth)acrylate', etc. has the same meaning as that of 'acrylate and/or methacrylate', etc., and the same applies below.

Furthermore, in the present invention, 'mass%' has the same meaning as that of 'wt%', and 'parts by mass' has the same meaning as that of 'parts by weight'.

In the explanation below, a combination of a preferred embodiment and another preferred embodiment is a more preferred embodiment.

### (Process for producing cylindrical printing plate precursor)

The process for producing a cylindrical printing plate precursor of the present invention comprises in this order (i) a preparation step of preparing a sheet-shaped resin, (ii) a disposition step of disposing on the outer periphery of a cylindrical support a cylindrical resin formed into a cylindrical shape by joining opposite end parts of the sheet-shaped resin, and (iii) a shrinkage step of shrinking the cylindrical resin so as to be in intimate contact with the cylindrical support.

Furthermore, the cylindrical printing plate precursor of the present invention (also called a 'cylindrical printing plate precursor') is a cylindrical printing substrate obtained by the process for producing a cylindrical printing plate precursor of the present invention.

The cylindrical printing plate precursor is preferably a cylindrical flexographic printing plate precursor.

Moreover, the cylindrical printing plate precursor is preferably a cylindrical printing plate precursor for laser engraving.

Examples of application embodiments of the cylindrical printing plate precursor of the present invention include a relief printing plate, an intaglio plate, a stencil plate, and a stamp, and preferred examples include a cylindrical printing plate precursor for laser engraving, which is a relief printing plate.

### <Preparation step>

The process for producing a cylindrical printing plate precursor of the present invention comprises (i) a preparation step of preparing a sheet-shaped resin.

The sheet-shaped resin is not particularly limited as long as it comprises at least a resin component (binder polymer) and can be shrunk in a shrinkage step, which is described later, but it is preferably formed from a resin composition comprising optional components described below.

Furthermore, the resin composition is preferably a resin composition for laser engraving.

Preferred examples of a method for forming a sheet-shaped resin include a method in which a resin composition is prepared, a solvent is removed as necessary from this resin composition, and it is then melt-extruded onto a support and a method in which a resin composition is prepared, the resin composition is cast on a support, and this is dried in an oven to thus remove a solvent.

The resin composition used in the present invention may be produced by, for example, dissolving or dispersing a binder polymer as an essential component and a filler, ethylenically unsaturated compound, fragrance, plasticizer, etc. as optional components in an appropriate solvent and subsequently dissolving a crosslinking agent, polymerization initiator, crosslinking promoter, etc. similarly as optional components. From the viewpoint of ease of formation of a sheet-shaped resin, the thickness precision of a resulting cylindrical printing plate precursor, and ease of handling of a sheet-shaped resin and a cylindrical resin, it is necessary to remove at least part of the solvent component in a stage of producing a cylindrical printing plate precursor, and the solvent is therefore preferably a volatile organic solvent.

Each component in the sheet-shaped resin, cylindrical resin, and resin composition suitably used in the present invention is explained below.

### <Binder polymer>

The sheet-shaped resin and the cylindrical resin comprise a binder polymer.

The resin composition used in the present invention comprises a binder polymer.

The binder polymer (hereinafter, also called a 'binder') preferably has a weight-average molecular weight of 1,000 to 3,000,000. In the present invention, with regard to the binder, one type may be used on its own or two or more types may be used in combination. In particular, when the resin composition is used in the relief-forming layer of the cylindrical printing plate precursor for laser engraving, it is preferable to select a binder while taking into consideration various performance aspects such as laser engraving sensitivity, ink transfer properties, and engraving residue dispersibility. In the present invention, as long as properties desired for printing are obtained, a single elastomer material or a combination of materials may be used in the resin composition. Examples of the elastomer material are described in the Plastic Technology Handbook, Chandler et al., Ed., (1987). In many cases, for preparation of an elastomer layer it is preferable to use a thermoplastic elastomer material.

In the present invention, the weight-average molecular weight of the binder polymer is preferably 1,000 to 3,000,000, more preferably 2,000 to 500,000, yet more preferably 3,000 to 100,000, and particularly preferably 5,000 to 50,000.

The weight-average molecular weight may be determined by a GPC (gel permeation chromatograph) method using a reference polystyrene calibration curve. The weight-average molecular weight is the value on a polystyrene basis by GPC measurement.

In the present invention, examples of the binder polymer include a polystyrene resin, a polyester resin, a polyamide resin, a polyurea resin, a polyamideimide resin, a polyurethane resin, a polysulfone resin, a polyether sulfone resin, a polyimide resin, a polycarbonate resin, a hydroxyethylene unit-containing hydrophilic polymer, an acrylic resin, an acetal resin, an epoxy resin, a polycarbonate resin, and a conjugated diolefin resin. Among them, particularly preferred examples include a conjugated diolefin hydrocarbon resin, a polyurethane resin, and an acetal resin.

Furthermore, as the binder polymer, a thermoplastic elastomer can be cited preferably. With this embodiment, the cylindrical printing plate precursor has excellent thickness precision and can suitably be used as a cylindrical printing plate precursor for laser engraving.

In the present invention, a 'thermoplastic elastomer' means one having the properties of instantaneously deforming in response to an external force when it is applied and of recovering its original shape in a short time when the external force is removed.

In the present invention, the thermoplastic elastomer means a polymer that can be stretched twice the distance between reference lines of an I-shaped test piece before stretching in a tensile test at 20°C based on a tensile set test in accordance with JIS K 6262-1997, and that exhibits a tensile set of no more than 30% 5 minutes after removing the external tensile force after being held for 5 minutes in the stretched state with a distance twice the distance between the reference lines prior to stretching.

Furthermore, the thermoplastic elastomer in the present invention preferably has a polymer glass transition temperature (Tg) of less than 20°C. In the case of a polymer having two or more Tgs, at least one of the Tgs is preferably less than 20°C.

Examples of the thermoplastic elastomer include a chlorinated polyethylene-based thermoplastic elastomer, syndiotactic-1,2-polybutadiene, a simple blended olefin-based thermoplastic elastomer, a polymerized olefin-based thermoplastic elastomer, a crosslinked olefin-based thermoplastic elastomer, a polyvinyl chloride-based thermoplastic elastomer, a polyurethane-based thermoplastic elastomer, a polyester-based thermoplastic elastomer, a polyamide-based thermoplastic elastomer, a fluorine-based thermoplastic elastomer, a styrene-conjugated diene-based block copolymer, and a hydrogenated styrene-based thermoplastic elastomer.

Among them, preferred examples of the thermoplastic elastomer include a styrene-butadiene-styrene block copolymer.

Hereinafter, the conjugated diolefin resin, the polyulethane resin and the acetal resin will be described in detail.

### <Conjugated diolefin resin>

Examples of the conjugated diolefin hydrocarbon resin include natural or synthetic polymers of a conjugated diolefin hydrocarbon, such as polyisoprene, 1,2-polybutadiene, 1,4-polybutadiene, and butadiene/acrylonitrile and diene/styrene thermoplastic elastomer block copolymers. In one embodiment, it is an elastomer block copolymer in the form of an A-B-A type block copolymer where A denotes a non-elastomer block and B denotes an elastomer block. The non-elastomer block A is for example a vinyl polymer such as polystyrene. Examples of the elastomer block B include polybutadiene and polyisoprene. An elastomer material such as a copolymer of butadiene and styrene, a copolymer of isoprene and styrene, or a styrene-diene-styrene triblock copolymer is particularly preferable. The binder may be soluble, swellable, or dispersible in an aqueous, semi-aqueous, water, or organic solvent washing solution. In general, an elastomer binder suitable for washing development is also suitable for use in a thermal treatment in which an unpolymerized region of a photopolymerizable layer softens, melts, or flows during heating.

### polyurethane resin

The resin composition that is used in the present invention more preferably comprises a polyurethane resin as a binder polymer.

The polyurethane resin is preferably a resin having a urethane bond which is a reaction product of at least one diol compound represented by following formula (1) and at least one diisocyanate compound represented by following formula (2). In order to obtain the polyurethane resin, a synthesis method based on a known polyaddition reaction can be used. For example, the synthesis method described in Examples 1 to 7 of JP-A-2011-136430 may be used.

HO-X⁰-OH (1)

OCN-Y⁰-NCO (2)

In formula (1) and formula (2), X⁰ and Y⁰ independently represent a divalent organic group.

The diol compound and the diisocyanate compound will be described below.

### - Diol compound -

In the present invention, preferred examples of the diol compound include the straight-chain aliphatic diols, branched aliphatic diols, and cyclic aliphatic diols below.

Examples of the straight-chain aliphatic diol include a straight-chain aliphatic diol having 2 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched aliphatic diol include a branched aliphatic diol having 2 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic aliphatic diol include a cyclic aliphatic diol having 2 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-α,α'-diol, *p*-xylene-α,α'-diol, 2,2-bis(4-hydroxycyclohexyl)propane, 2,2-bis(4-hydroxyphenyl)propane, or dimer diol.

Among them, the diol compound is preferably a polycarbonate diol represented by Formula (CD) below.

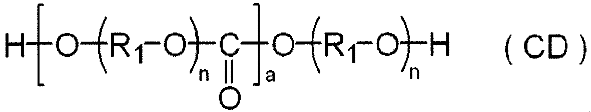

In formula (CD), R₁'s independently represent a linear, branched and/or cyclic divalent hydrocarbon group having 2 to 50 carbon atoms, which may contain an oxygen atom or the like (at least one atom selected from the group consisting of a nitrogen atom, a sulfur atom and an oxygen atom) in the carbon skeleton; R1's may be a single component or may be composed of plural components; n is preferably an integer from 1 to 500; and a is preferably an integer of 1 or greater.

Among them, R₁ is preferably a divalent alkylene group having 2 to 6 carbon atoms, and more preferably a dimethylene group, a trimethylene group, a tetramethylene group or a hexamethylene group. n is preferably an integer from 1 to 5.

The 'hydrocarbon group' in R₁ is a saturated or unsaturated hydrocarbon group.

The 'carbon skeleton' in R₁ means a structural part having 3 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain.

In the present invention, 'main chain' means the relatively longest bonded chain in the molecule of a polymer compound that constitutes a resin, and 'side chain' means a carbon chain that is branched from the main chain

R₁ in the polycarbonate diol represented by Formula (CD) is preferably introduced from a diol compound preferably used as a starting material for synthesis of the polycarbonate diol.

Preferred examples of the diol compound include the above-mentioned straight-chain aliphatic diols, branched aliphatic diols, and cyclic aliphatic diols.

Examples of the polyhydric alcohol that is preferably used in order to introduce a hydrocarbon group containing at least one type of atom selected from the group consisting of nitrogen, sulfur, and oxygen in R₁ include diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, and 2,5-dihydroxy-1,4-dithiane.

With regard to R₁ as a hydrocarbon group having at least one type of atom selected from the group consisting of nitrogen, sulfur, and oxygen, from the viewpoint of solvent resistance R₁ preferably comprises at least one ether bond, and from the viewpoint of solvent resistance and durability R₁ is more preferably a diethylene glycol-derived group (group represented by -(CH₂)₂-O-(CH₂)₂-). Preferred examples of R₁ include a group represented by Formula (CD2) below.

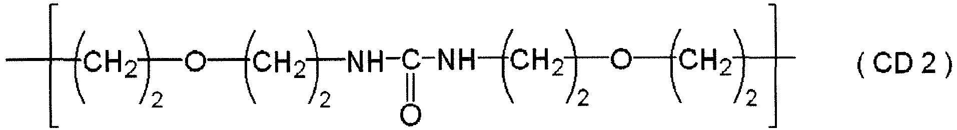

The polycarbonate diol may be produced by for example a conventionally known method as described in JP-B-5-29648 (JP-B denotes a Japanese examined patent application publication), and specifically it may be produced by an ester exchange reaction between a diol and a carbonic acid ester.

Examples of commercially available polycarbonate diols include the product name 'PLACCEL CD205PL', the product name 'PLACCEL CD210PL', and the product name 'PLACCEL CD220PL' (all manufactured by Daicel Chemical Industries, Ltd.), 'PCDL T5652' and 'PCDL L4672' (both manufactured by Asahi Kasei), and 'UM-CARB90 (1/1)' (Ube Industries, Ltd.).

In the present invention, with regard to the polycarbonate diol, one type or two or more types may be used according to the intended purpose, but it is desirable to use one type of polycarbonate diol.

The number-average molecular weight of these polycarbonate diols is preferably in the range of 1,000 to 200,000, more preferably in the range of 1,500 to 10,000, and yet more preferably in the range of 2,000 to 8,000.

A polyurethane resin having a carbonate bond may be obtained by subjecting a hydroxy group of the polycarbonate diol to a polyaddition reaction with an isocyanate group of the diisocyanate compound represented by Formula (2).

### - Diisocyanate compound -

Next, the diisocyanate compound represented by Formula (2) is explained.

In the above-mentioned Formula (2), Y⁰ represents a divalent aliphatic or aromatic hydrocarbon group which may be substituted. According to necessity, Y⁰ may have another functional group which does not react with an isocyanate group, for example, an ester group, a urethane group, an amide group, or an ureido group.

Examples of the diisocyanate compound include an aliphatic diisocyanate compound, an alicyclic diisocyanate compound, an aromatic-aliphatic diisocyanate compound, and an aromatic diisocyanate compound.

Examples of the aliphatic diisocyanate compound include 1,3-trimethylene diisocyanate, 1,4-tetramethylene diisocyanate, 1,3-pentamethylene diisocyanate, 1,5-pentamethylene diisocyanate, 1,6-hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, 3-methyl-1,5-pentamethylene diisocyanate, 2,4,4-trimethyl-1,6-hexamethylene diisocyanate, 2,2,4-trimethyl-1,6-hexamethylene diisocyanate, 2,6-diisocyanate methyl caproate, and lysine diisocyanate.

Examples of the alicyclic diisocyanate compound include 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, 1,3-bis(isocyanatomethyl)cyclohexane, 1,4-bis(isocyanatomethyl)cyclohexane, isophorone diisocyanate, and norbornane diiso cyanate.

Examples of the aromatic-aliphatic diisocyanate compound include 1,3-xylene diisocyanate, 1,4-xylene diisocyanate, ω,ω'-diisocyanato-1,4-diethylbenzene, 1,3-bis(1-isocyanato-1-methylethyl)benzene, 1,4-bis(1-isocyanato-1-methylethyl)benzene, and 1,3-bis(α,α-dimethylisocyanatomethyl)benzene.

Examples of the aromatic diisocyanate compound include *m*-phenylene diisocyanate, p-phenylene diisocyanate, 2,4-tolylene diisocyanate, 2,6-tolylene diisocyanate, naphthylene-1,4-diisocyanate, 1,5-naphthalene diisocyanate, 4,4'-diphenyl diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate.

Among them, 1,6-hexamethylene diisocyanate, 1,3-bis(isocyanatomethyl)cyclohexane, isophorone diisocyaante, 4,4'-diphenylmethane diisocyanate, and 2,4-tolylene diisocyanate are more preferable.

The polyurethane resin used in the present invention preferably has an ethylenically unsaturated group at an end or in a side chain of the main polymer chain. The ethylenically unsaturated group at an end of the main chain may be present at one end only, but the polyurethane resin preferably has the ethylenically unsaturated group at both ends of the main chain.

Examples of the ethylenically unsaturated group include a group with an unsaturated carboxylic acid as a starting material, such as an acryloyl group, a methacryloyl group, an acrylamide group, a methacrylamide group, or a phthalimide group, and a radically polymerizable group such as a styryl group, a vinyl group, or an allyl group. Among them, an acryloyl group and a methacryloyl group are preferable.

An ethylenically unsaturated group can be introduced into an end of the main chain of the polyurethane resin by, in the polyaddition reaction used for the synthesis of the polyurethane resin, allowing a hydroxyl group or an isocyanate group to remain at an end of the main chain of the polyurethane resin obtained, and causing the polyurethane resin to react with a compound having a functional group which is reactive with the hydroxyl group or isocyanate group, and an ethylenically unsaturated group. The compound having such functional group is more preferably a compound having an isocyanate group for a terminal hydroxyl group, or a compound having a hydroxyl group for a terminal isocyanate group.

Specific examples of a compound having a functional group which is reactive with a hydroxyl group at an end of the main chain of the polyurethane resin and an ethylenically unsaturated group include, as commercially available products, 2-methacryloyloxyethyl isocyanate (KARENZ MOI (registered trademark)), 2-acryloyloxyethyl isocyanate (KARENZ AOI (registered trademark)) and 1,1-bis(acryloyloxymethyl)ethyl isocyanate (KARENZ BEI (registered trademark)) (all manufactured by Showa Denko K.K.).

Specific examples of a compound having a functional group which is reacti ve with an isocyanate group at an end of the main chain of the polyurethane resin and an ethylenically unsaturated group include 2-hydroxyethyl acrylate, 2-hydroxyethyl methacrylate, 2-hydroxypropyl acrylate and 2-hydroxypropyl methacrylate.

Examples of a method for introducing an ethylenically unsaturated group into a side chain of the polyurethane resin include a method of using a compound which already has an ethylenically unsaturated group as the diol compound or diisocyanate compound that is used as a raw material, in the polyaddition reaction used for the synthesis of the polyurethane resin. Furthermore, a method in which a polyurethane resin is obtained from a raw material monomer having a reactive group such as a carboxyl group, a hydroxyl group or an amino group, and then a compound having a functional group such as an epoxy group or an isocyanate group which reacts with the reactive group such as a carboxyl group, a hydroxyl group or an amino group carried in a side chain of the polyurethane resin, and an ethylenically unsaturated group, is allowed to react with the polyurethane resin to introduce the ethylenically unsaturated group into the side chain, may also be used.

The polyurethane resin used in the present invention may have, as a functional group, an organic group which contains at least one of an ether bond, an amide bond, a urea bond, an ester bond, a biuret bond and an allophanate bond, in addition to the urethane bond.

### Acetal resin

The resin composition for laser engraving that is used in the present invention preferably comprises an acetal resin as a binder polymer. The acetal resin is preferably polyvinyl acetal, and derivatives thereof.

In this description, hereinafter, polyvinyl acetal and derivatives thereof are called just a polyvinyl acetal derivative. That is, a polyvinyl acetal derivative includes polyvinyl acetal and derivatives thereof, and is a generic term used to refer to compounds obtained by converting polyvinyl alcohol obtained by saponifying polyvinyl acetate into a cyclic acetal.

The acetal content in the polyvinyl acetal derivative (mole% of vinyl alcohol units converted into acetal relative to the total number of moles of vinyl acetate monomer starting material as 100 mol%) is preferably 30 to 90 mol%, more preferably 50 to 85 mol%, and particularly preferably 55 to 78 mol%.

The vinyl alcohol unit in the polyvinyl acetal is preferably 10 to 70 mol% relative to the total number of moles of the vinyl acetate monomer starting material, more preferably 15 to 50 mol%, and particularly preferably 22 to 45 mol%.

Furthermore, the polyvinyl acetal may have a vinyl acetate unit as another component, and the content thereof is preferably 0.01 to 20 mol%, and more preferably 0.1 to 10 mol%. The polyvinyl acetal derivative may further have another copolymerized constitutional unit.

Examples of the polyvinyl acetal derivative include a polyvinyl butyral derivative, a polyvinyl propylal derivative, a polyvinyl ethylal derivative, and a polyvinyl methylal derivative. Among them, a polyvinyl butyral derivative (hereinafter, it is also referred to as a "PVB derivative") is a derivative that is preferable. In this description, for examples, a polyvinyl butyral derivative includes polyvinyl butyral and derivatives thereof, and the same can be said for other polyvinyl acetal derivatives.

Hereinafter, polyvinyl butyral and derivatives thereof are cited for explanation as particularly preferable examples of polyvinyl acetal, but are not limited to these.

Polyvinyl butyral has a structure as shown below, and is constituted while including these structural units, and L is preferably 50 mol% and more.

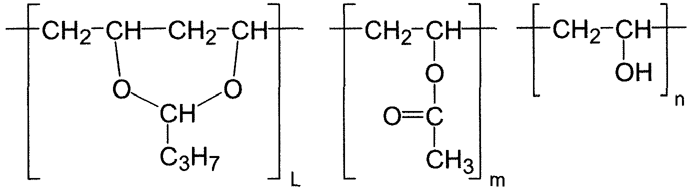

In formula, L, m and n represent the content of each structural units by mol%.

The PVB derivative is also available as a commercial product, and preferred examples thereof include, from the viewpoint of alcohol dissolving capability (particularly, ethanol), "S-REC B" series and "S-REC K (KS)" series manufactured by SEKISUI CHEMICAL CO., LTD. and "DENKA BUTYRAL" manufactured by DENKI KAGAKU KOGYO KABUSHIKI KAISHA. From the viewpoint of alcohol dissolving capability (particularly, ethanol), "S-REC B" series manufactured by SEKISUI CHEMICAL CO., LTD. and "DENKA BUTYRAL" manufactured by DENKI KAGAKU KOGYO KABUSHIKI KAISHA are more preferable. Among these, particularly preferable commercial products are shown below along with the values L, m, and n in the above formulae and the molar weight. Examples of "S-REC B" series manufactured by SEKISUI CHEMICAL CO., LTD. include "BL-1" (L=61, m=3, n=36, weight-average molecular weight: 19,000), "BL-1 H" (L=67, m=3, n=30, weight-average molecular weight: 20,000), "BL-2" (L=61, m=3, n=36, weight-average molecular weight: about 27,000), "BL-5" (L=75, m=4, n=21, weight-average molecular weight: 32,000), "BL-S" (L=74, m=4, n=22, weight-average molecular weight: 23,000), "BM-S" (L=73, m=5, n=22, weight-average molecular weight: 53,000), and "BH-S" (L=73, m=5, n=22, weight-average molecular weight: 66,000), examples of "DENKA BUTYRAL" manufactured by DENKI KAGAKU KOGYO include "#3000-1" (L=71, m=1, n=28, weight-average molecular weight: 74,000), "#3000-2" (L=71, m=1, n=28, weight-average molecular weight: 90,000), "#3000-4" (L=71, m=1, n=28, weight-average molecular weight: 117,000), "#4000-2" (L=71, m=1, n=28, weight-average molecular weight: 152,000), "#6000-C" (L=64, m=1, n=35, weight-average molecular weight: 308,000), "#6000-EP" (L=56, m=15, n=29, weight-average molecular weight: 381,000), "#6000-CS" (L=74, m=1, n=25, weight-average molecular weight: 322,000), and "#6000-AS" (L=73, m=1, n=26, weight-average molecular weight: 242,000), and examples of "MOWITAL" manufactured by KURARAY CO., LTD. include "B60H" (L=71, m=1, n=28, weight-average molecular weight: 140,000), "B60HH" (L=80, m=1, n=19, weight-average molecular weight: 190,000), and "B30HH" (L=80, m=1, n=19, weight-average molecular weight: 130,000).

When the relief-forming layer is formed using the PVB derivative, a method of casting and drying a solution in which a solvent is dissolved is preferable from the viewpoint of smoothness of the film surface.

The content of the binder polymer in the sheet-shaped resin and the cylindrical resin is preferably 2 to 95 mass%, and more preferably 30 to 80 mass%, relative to the total solids content by mass excluding volatile components such as solvent.

Furthermore, the content of the binder polymer in the resin composition used in the present invention is preferably 2 to 95 mass%, and more preferably 30 to 80 mass%, relative to the total solids content by mass excluding volatile components such as solvent.

When the content of the binder polymer is within this range, the flexographic printing plate precursor is excellent in terms of tackiness.

### <Thermally fusible particles>

The sheet-shaped resin and the cylindrical resin preferably comprise thermally fusible particles.

The resin composition used in the present invention preferably comprises thermally fusible particles.

The average particle size of the thermally fusible particles is preferably 45 to 1,000 nm, more preferably 45 to 500 nm, yet more preferably 45 to 300 nm, particularly preferably 45 to 100 nm, and most preferably 48 to 52 nm.

In the present specification, the particle size is defined as a particle diameter measured by photon correlation spectrometry, also known as quasielastic- or dynamic light-scattering. This method is a convenient method for measuring particle size, and the value for measured particle size agrees well with the particle size measured by transmission electron microscope (TEM), as disclosed in Stanley D. Duke et al. in Technical Note-002B, Calibration of Spherical Particles by Light Scattering, May 15 2000 (revised from an article published in Particulate Science and Technology 7, p.223-228 (1989) on 1/3/2000).

The content of the thermally fusible particles in the sheet-shaped resin and the cylindrical resin is preferably 1 to 30 mass% relative to the total solids content by mass, more preferably 1 to 15 mass%, and yet more preferably 5 to 10 mass%.

The amount of thermally fusible particles present in the resin composition is preferably 1 to 30 mass% relative to the total solids content by mass, more preferably 1 to 15 mass%, and yet more preferably 5 to 10 mass%.

The thermally fusible particles are preferably of polyethylene, poly(vinyl) chloride, polymethyl (meth)acrylate, polyethyl (meth)acrylate, polyvinylidene chloride, poly(meth)acrylonitrile, polyvinylcarbazole, polystyrene, or a copolymer thereof, and more preferably polystyrene or a derivative thereof, a mixture comprising polystyrene and poly(meth)acrylonitrile or derivatives thereof, or a copolymer comprising polystyrene and poly(meth)acrylonitrile or derivatives thereof. The latter copolymer preferably comprises at least 50 mass% of polystyrene, and more preferably comprises at least 65 mass% of polystyrene.

In order to obtain sufficient resistance to an organic chemical such as a hydrocarbon used in a printing plate washing agent, the thermally fusible particles preferably comprise at least 5 mass% of a nitrogen atom-containing monomer unit as described in European Patent No. 1,219,416, and more preferably comprise at least 30 mass% of a nitrogen atom-containing monomer unit such as a (meth)acrylonitrile-derived monomer unit.

Among them, the material for the thermally fusible particles is particularly preferably a styrene-acrylonitrile copolymer. Furthermore, the copolymerization ratio in the styrene-acrylonitrile copolymer is preferably 1:1 to 5:1 (styrene:acrylonitrile) as a ratio by mass.

The weight-average molecular weight of the resin used as a material for the thermally fusible particles is preferably 5,000 to 1,000,000.

### <Solvent>

The sheet-shaped resin and the cylindrical resin preferably comprise a solvent, and particularly preferably comprise a solvent when shrinkage is carried out in the shrinkage step by removing a solvent.

The resin composition of the present invention preferably comprises a solvent, and particularly preferably comprises a solvent when shrinkage is carried out in the shrinkage step by removing a solvent.

It is preferable to use an organic solvent as the solvent.

Preferred specific examples of aprotic organic solvents include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N*-dimethylacetamide, *N*-methylpyrrolidone, and dimethyl sulfoxide.

Preferred specific examples of protic organic solvents include methanol, ethanol, 1-propanol, 2-propanol, 1-butanol, 1-methoxy-2-propanol, ethylene glycol, diethylene glycol, and 1,3-propanediol.

Among them, particularly preferred examples of the solvent include propylene glycol monomethyl ether acetate.

The content of the solvent in the cylindrical resin is preferably 1 to 30 mass% relative to the total solids content, more preferably 1 to 20 mass%, and yet more preferably 3 to 10 mass%. With this embodiment, handling of the cylindrical resin is easy, and when shrinkage is carried out in the shrinkage step by removing the solvent, the thickness precision is excellent.

The content of the solvent in the sheet-shaped resin may be identical to or different from the content of the solvent in the cylindrical resin. For example, the process for producing a cylindrical printing plate precursor of the present invention may comprise, between the preparation step and the shrinkage step, a step of removing part of the solvent or a step of thermally crosslinking the sheet-shaped resin, and when these steps are carried out the amount of solvent contained in the sheet-shaped resin decreases.

The content of the solvent in the sheet-shaped resin is preferably 1 to 50 mass% relative to the total solids content, more preferably 1 to 30 mass%, yet more preferably 3 to 20 mass%, and particularly preferably 3 to 10 mass%.

The content of the solvent in the resin composition is preferably 1 to 50 mass% relative to the total solids content, more preferably 1 to 30 mass%, and yet more preferably 3 to 20 mass%.

### <Crosslinking agent>

The sheet-shaped resin and the cylindrical resin preferably comprise a crosslinking agent from the viewpoint of forming a crosslinked structure and obtaining physical properties suitable for use as a printing plate.

Furthermore, in the present invention, from the viewpoint of forming a crosslinked structure and obtaining physical properties suitable for use as a printing plate, the resin composition preferably comprises a crosslinking agent.

The crosslinking agent that can be used in the present invention may be used without any particular limitations as long as a relief-forming layer can be cured by increase in molecular weight due to a chemical reaction caused by heat (a radical polymerization reaction, a crosslinking reaction using an acid or a base as an initiating species, etc.). In particular, (1) an ethylenically unsaturated group-containing compound (hereinafter, also called a 'polymerizable compound' or an 'ethylenically unsaturated compound') or (2) an -SiR¹R²R³-containing crosslinking agent (R¹ to R³ independently denote a hydrogen atom, a halogen atom, or a monovalent organic group. At least one of R¹ to R³ is an alkyl group, an aryl group, an alkoxy group, a hydroxy group, or a halogen atom) is preferably used.

These compounds may form a crosslinked structure within the thermally cured layer by reacting with the binder, or may form a crosslinked structure by reacting with other polymerizable compounds.

The molecular weight of these crosslinking agents is not particularly limited, but is preferably 50 to 3,000, more preferably 70 to 2,500, and yet more preferably 100 to 2,000.

From the viewpoint of flexibility and brittleness of a crosslinked film, the total content of the crosslinking agent in the resin composition for laser engraving of the present invention is preferably in the range of 10 to 60 wt % relative to the total solids content by mass and more preferably in the range of 15 to 45 mass%.

From the viewpoint of flexibility and brittleness of a crosslinked film, the total content of the crosslinking agent in the sheet-shaped resin and the cylindrical resin is preferably in the range of 10 to 60 mass% relative to the total solids content by mass and more preferably in the range of 15 to 45 mass%.

From the viewpoint of flexibility and brittleness of a crosslinked film, the total content of the crosslinking agent in the sheet-shaped resin and the resin composition is preferably in the range of 10 to 60 mass% relative to the total solids content by mass and more preferably in the range of 15 to 45 mass%.

### -Ethylenically unsaturated compound-

The sheet-shaped resin and the cylindrical resin preferably comprise an ethylenically unsaturated compound in order to carry out shrinkage in the shrinkage step by means of volume shrinkage, and more preferably comprise an ethylenically unsaturated compound and a radical polymerization initiator, which is described later.

Furthermore, the resin composition used in the present invention comprises an ethylenically unsaturated compound in order to carry out shrinkage in the shrinkage step by means of volume shrinkage, and more preferably comprises an ethylenically unsaturated compound and a radical polymerization initiator, which is described later.

The 'polymerizable compound' referred to in the present invention means a compound having at least one ethylenically unsaturated group. The ethylenically unsaturated group is not particularly limited, but a (meth)acryloyl group, a vinyl group, an allyl group, etc. are preferably used, and a (meth)acryloyl group is particularly preferably used.

Examples of a monofunctional polymerizable compound, which has only one ethylenically unsaturated group, include an unsaturated carboxylic acid such as acrylic acid, methacrylic acid, itaconic acid, crotonic acid, isocrotonic acid, or maleic acid, a salt thereof, an ethylenically unsaturated group-containing anhydride, a (meth)acrylate, a (meth)acrylamide, a (meth)acrylonitrile, a styrene, and various types of polymerizable compound such as an unsaturated polyester resin, an unsaturated polyether resin, an unsaturated polyamide resin, or an unsaturated urethane resin.

Furthermore, preferred examples of the monofunctional polymerizable compound used include (meth)acrylic acid derivatives such as methyl (meth)acrylate, ethyl (meth)acrylate, *n*-butyl (meth)acrylate, 2-ethylhexyl (meth)acrylate, 2-hydroxyethyl (meth)acrylate, butoxyethyl (meth)acrylate, carbitol (meth)acrylate, cyclohexyl (meth)acrylate, benzyl (meth)acrylate, *N-*methylol(meth)acrylamide, and epoxy (meth)acrylate, *N*-vinyl compounds such as *N*-vinylpyrrolidone and *N*-vinylcaprolactam, and allyl compounds such as allyl glycidyl ether, diallyl phthalate, and triallyl trimellitate.

Examples of polyfunctional polymerizable compounds include ester or amide compounds of an unsaturated carboxylic acid and a polyhydric alcohol compound or a polyvalent amine compound, such as ethylene glycol di(meth)acrylate, triethylene glycol di(meth)acrylate, propylene glycol di(meth)acrylate, 1,3-butanediol diitaconate, pentaerythritol dicrotonate, sorbitol tetramalate, methylenebis(meth)acrylamide, and 1,6-hexamethylenebis(meth)acrylamide, urethane acrylates described in JP-A-51-37193, polyester acrylates described in JP-A-48-64183, JP-B-49-43191 (JP-B denotes a Japanese examined patent application publication) and JP-B-52-30490, and a polyfunctional acrylate or methacrylate such as an epoxy acrylate formed by reaction of an epoxy resin and (meth)acrylic acid. Furthermore, radically polymerizable or crosslinkable monomers and oligomers that are commercial products or are industrially known, such as those described in Journal of the Adhesion Society of Japan, Vol. 20, No. 7, pp. 300 to 308 (1984); 'Kakyozai Handobukku' (Crosslinking Agent Handbook), Ed. S. Yamashita (Taiseisha, 1981); 'UV·EB Koka Handobukku (Genryohen)' (UV·EB Curing Handbook (Starting Materials)) Ed. K. Kato (Kobunshi Kankoukai, 1985); 'UV·EB Koka Gijutsu no Oyo to Shijyo' (Application and Market of UV·EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

From the viewpoint of forming a more highly crosslinked structure and forming a crosslinked structure from the crosslinking agent on its own, the ethylenically unsaturated compound preferably comprises a polyfunctional ethylenically unsaturated compound.

The total content of the ethylenically unsaturated compound in the sheet-shaped resin and the cylindrical resin is preferably in the range of 10 to 60 mass% relative to the total solids content by mass from the viewpoint of flexibility and brittleness of a crosslinked film, and more preferably in the range of 15 to 45 mass%.

Furthermore, in the resin composition used in the present invention, the total content of the ethylenically unsaturated compound is preferably in the range of 10 to 60 mass% relative to the total solids content by mass in the resin composition from the viewpoint of flexibility and brittleness of a crosslinked film, and more preferably in the range of 15 to 45 mass%.

When the polymerizable compound is used as a crosslinking agent, the binder polymer is preferably a polymer comprising an ethylenically unsaturated group in the molecule, but another binder polymer may be used.

### - Crosslinking agent having -SiR¹R²R³ -

As the crosslinking agent that can be used in the present invention, a crosslinking agent having at least -SiR¹R²R³ as a crosslinkable group can preferably be cited, and a crosslinking agent having two or more -SiR¹R²R³ can more preferably be cited.

R¹ to R³ independently denote a hydrogen atom, a halogen atom, or a monovalent organic group. At least one of R¹ to R³ is an alkyl group, an alkoxy group, a hydroxy group, or a halogen atom.

It is preferable that at least two of R¹ to R³ are alkoxy groups or halogen atoms, and it is particularly preferable that R¹ to R³ are independently alkoxy groups or halogen atoms. From the viewpoint of ease of handling a compound it is preferable that at least two of R¹ to R³ are alkoxy groups.

From the viewpoint of rinsing properties and printing durability, the alkoxy group denoted by R¹ to R³ above is preferably an alkoxy group having 1 to 30 carbon atoms, more preferably an alkoxy group having 1 to 15 carbon atoms, and yet more preferably an alkoxy group having 1 to 5 carbon atoms.

Furthermore, examples of the halogen atom denoted by R¹ to R³ above include an F atom, a Cl atom, a Br atom, and an I atom; from the viewpoint of ease of synthesis and stability a Cl atom and a Br atom are preferable, and a Cl atom is more preferable.

Among the above, it is preferable that all of R¹ to R³ are methoxy groups or ethoxy groups.

A crosslinking agent having two or more -SiR¹R²R³ is also preferably used. A crosslinking agent having two to six -SiR¹R²R³ is preferably used. As a group that links two or more -SiR¹R²R³ in a crosslinking agent having two or more -SiR¹R²R³, a di- or higher-valent organic group can be cited; from the viewpoint of high engraving sensitivity a heteroatom (N, S, O)-containing di- or higher-valent organic group is preferable, and an S atom-containing di- or higher-valent organic group is more preferable.

As a crosslinking agent having at least -SiR¹R²R³, a compound having in the molecule two groups in which a methoxy group or ethoxy group is bonded to an Si atom and the Si atoms are bonded via an alkylene group containing a heteroatom, and particularly preferably an S atom, is suitable.

Examples of the crosslinking agent having -SiR¹R²R³ include vinyltrichlorosilane, vinyltrimethoxysilane, vinyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane, *N*-(β-aminoethyl)-γ-aminopropylmethyldimethoxysilane, *N*-(β-aminoethyl)-γ-aminopropyltrimethoxysilane, *N*-(β-aminoethyl)-γ-aminopropyltriethoxysilane, γ-aminopropyltrimethoxysilane, γ-aminopropyltriethoxysilane, *N*-phenyl-γ-aminopropyltrimethoxysilane, γ-mercaptopropyltrimethoxysilane, γ-chloropropyltrimethoxysilane, and γ-ureidopropyltriethoxysilane.

Specific examples of the crosslinking agent having - SiR¹R²R³ that can be used in the present invention further include the compounds described in paragraphs 0073 to 0084 of JP-A-2011-136455.

The total content of the ethylenically unsaturated compound in the sheet-shaped resin and the cylindrical resin is preferably in the range of 10 to 60 mass% relative to the total solids content by mass from the viewpoint of flexibility and brittleness of a crosslinked film, and more preferably in the range of 15 to 45 mass%.

Furthermore, in the resin composition used in the present invention, the content of the -SiR¹R²R³-containing crosslinking agent is preferably in the range of 10 to 60 mass% relative to the total solids content by mass in the resin composition from the viewpoint of flexibility and brittleness of a crosslinked film, and more preferably in the range of 15 to 45 mass%.

When a compound having -SiR¹R²R³ is used as the crosslinking agent, it is preferable to use a binder polymer having a functional group such as a hydroxy group, etc. (the above-mentioned polyvinyl acetal derivative, etc.) that can react therewith, but another binder polymer may be used.

### <Polymerization initiator>

When the sheet-shaped resin and the cylindrical resin comprise a polymerizable compound as the crosslinking agent, it is preferable for them to comprise a polymerization initiator, and more preferably a radical polymerization initiator.

Furthermore, when the resin composition used in the present invention comprises a polymerizable compound as the crosslinking agent, it is preferable for it to comprise a polymerization initiator, and more preferably a radical polymerization initiator.

With regard to the polymerization initiator, those known to a person skilled in the art may be used without any limitations. The radical polymerization initiator, which is a preferred polymerization initiator, is explained in detail below, but the present invention should not be construed as being limited by these descriptions.

In the present invention, preferable polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (I) azo compounds. Hereinafter, although specific examples of the (a) to (I) are cited, the present invention is not limited to these.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

A polymerization initiator can be divided into a photopolymerization initiator and a thermopolymerization initiator.

In the present invention, when applies to the relief-forming layer of the flexographic printing plate precursor, from the viewpoint of engraving sensitivity and making a favorable relief edge shape, (c) organic peroxides and (I) azo compounds which are thermopolymerization initiators are more preferable.

Moreover, (c) organic peroxides and (I) azo compounds preferably include the following compounds.

### (c) Organic peroxide

Preferred examples of the organic peroxide (c) that can be used in the present invention include peroxyester-based ones such as 3,3',4,4'-tetra*(t-*butylperoxycarbonyl)benzophenone, 3,3',4,4'-tetra*(t-*amylperoxycarbonyl)benzophenone, 3,3',4,4'-tetra*(t-*hexylperoxycarbonyl)benzophenone, 3,3',4,4'-tetra*(t-*octylperoxycarbonyl)benzophenone, 3,3',4,4'-tetra(cumylperoxycarbonyl)benzophenone, 3,3',4,4'-tetra*(p-*isopropylcumylperoxycarbonyl)benzophenone, di-*t*-butyldiperoxyisophthalate, *t-*butylperoxybenzoate, *t*-butylperoxy-3-methylbenzoate, *t*-butylperoxylaurate, *t-*butylperoxypivalate, *t*-butylperoxy-2-ethylhexanoate, *t*-butylperoxy-3,5,5-trimethylhexanoate, *t*-butylperoxyneoheptanoate, *t*-butylperoxyneodecanoate, and *t*-butylperoxyacetate, α,α'-di(*t*-butylperoxy)diisopropylbenzene, *t-*butylcumylperoxide, di-*t*-butylperoxide, *t*-butylperoxyisopropylmonocarbonate, and *t*-butylperoxy-2-ethylhexylmonocarbonate.

### (I) Azo compounds

Preferable (I) azo compounds that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

In the present invention, with regard to the polymerization initiator, one type may be used on its own, or two or more types may be used in combination.

The total content of the polymerization initiator in the sheet-shaped resin and the cylindrical resin is preferably in the range of 0.01 to 10 mass% relative to the total solids content by mass from the viewpoint of flexibility and brittleness of a crosslinked film, and more preferably in the range of 0.1 to 3 mass%.

Furthermore, in the resin composition used in the present invention, the total content of the polymerization initiator is preferably in the range of 0.01 to 10 mass% relative to the total solids content by mass in the resin composition, and more preferably in the range of 0.1 to 3 mass%.

### - Crosslinking promoter -

When the '-SiR¹R²R³-containing compound' is used as a crosslinking agent in the sheet-shaped resin and the cylindrical resin, in order to promote a crosslinking reaction thereof, it is preferable for them to comprise a crosslinking promoter (hereinafter, also called a 'catalyst').

Furthermore, when the '-SiR¹R²R³-containing compound' is used as a crosslinking agent in the resin composition used in the present invention, in order to promote a crosslinking reaction thereof, it is preferable for it to comprise a crosslinking promoter.

The crosslinking promoter that can be used in the present invention is not particularly limited as long as it is a compound that can promote a crosslinking reaction of the '-SiR¹R²R³-containing compound', and (1) an acidic catalyst or basic catalyst or (2) a metal complex catalyst may be used.

The crosslinking promoter is preferably (1) an acidic catalyst or basic catalyst. When a hydroxy group is involved in the reaction, from the viewpoint of the crosslinking rate of the hydroxy group, a basic catalyst is particularly preferable.

### (1) Acidic catalyst or basic catalyst

As the catalyst, an acidic compound or basic compound is used as it is or in the form of a solution in which it is dissolved in a solvent such as water or an organic solvent (hereinafter, also called an acidic catalyst or basic catalyst respectively). The concentration when dissolving in a solvent is not particularly limited, and it may be selected appropriately according to the properties of the acidic compound or basic compound used, desired catalyst content, etc.

The type of acidic catalyst or basic catalyst is not particularly limited; specific examples of the acidic catalyst include a hydrogen halide such as hydrochloric acid, nitric acid, sulfuric acid, sulfurous acid, hydrogen sulfide, perchloric acid, hydrogen peroxide, carbonic acid, a carboxylic acid such as formic acid or acetic acid, a carboxylic acid in which R of the structural formula RCOOH is substituted with another element or substituent, a sulfonic acid such as benzenesulfonic acid, phosphoric acid, a heteropoly acid, and an inorganic solid acid, and examples of the basic catalyst include an ammoniacal base such as aqueous ammonia, an amine such as ethylamine or aniline, an alkali metal hydroxide, an alkali metal alkoxide, an alkaline earth oxide, a quaternary ammonium salt compound, and a quaternary phosphonium salt compound. Among these, from the viewpoint of progressing fastly a condensation reaction of silane compounds, methanesulfonic acid, *p*-toluenesulfonic acid, pyridinium-*p-*toluene sulfonate, phosphoric acid, phosphonic acid, acetic acid, 1,8-diazabicyclo[5.4.0]undec-7-ene, and hexamethylenetetramine are preferable, methanesulfonic acid, *p*-toluenesulfonic acid, phosphoric acid, 1,8-diazabicyclo[5.4.0]undec-7-ene, and hexamethylenetetramineare are more preferable, and 1,8-diazabicyclo[5.4.0]undec-7-ene phosphoric acid and are particularly preferable.

### (2) Metal complex catalyst

The metal complex catalyst that can be used in the present invention is preferably a metal complex catalyst formed from a metal element selected from the group consisting of Groups 2, 4, 5, and 13 of the periodic table and an oxo or hydroxy oxygen-containing compound selected from the group consisting of β-diketones, ketoesters, hydroxycarboxylic acids and esters thereof, amino alcohols, and enolic active hydrogen compounds.

Furthermore, among the constituent metal elements, a Group 2 element such as Mg, Ca, Sr, or Ba, a Group 4 element such as Ti or Zr, a Group 5 element such as V, Nb, or Ta, and a Group 13 element such as Al or Ga are preferable, and they form a complex having an excellent catalytic effect. Among them, a complex obtained from Zr, Al, or Ti (ethyl orthotitanate, etc.) is excellent and preferable.

In the present invention, with regard to the crosslinking promoter, one type may be used on its own, or two or more types may be used in combination.

The content of the crosslinking promoter in the sheet-shaped resin and the cylindrical resin relative to the total solids content by mass is preferably 0.01 to 20 mass%, and more preferably 0.1 to 15 mass%.

Furthermore, the content of the crosslinking promoter in the resin composition used in the present invention relative to the total solids content by mass in the resin composition is preferably 0.01 to 20 mass%, and more preferably 0.1 to 15 mass%.

### <Filler>

The sheet-shaped resin and the cylindrical resin preferably comprise a filler.

The resin composition used in the present invention preferably comprises a filler.

The filler in the present invention is not particularly limited as long as it does not undergo molecular dispersion in the sheet-shaped resin, the cylindrical resin, or the resin composition but disperses in the form of a solid.

Examples of the filler that can be used in the present invention include an organic filler and an inorganic filler, and among them carbon black is particularly preferable since it is also suitable as a photothermal conversion agent, which is described later.

Examples of the organic fillers include low density polyethylene particles, high density polyethylene particles, polystyrene particles, various organic pigments, micro balloons, urea-formalin fillers, polyester particles, cellulose fillers, organic metals, etc.

As organic pigments, known ones are cited, including indigo-based pigment, quinacridone-based pigment, dioxazine-based pigment, isoindolinone-based pigment, quinophthalone-based pigment, dyed lake pigment, azine pigment, nitroso pigment, nitro pigment, natural pigment, fluorescent pigment, etc. An inorganic pigment may be contained.

Among them, carbon black is particularly preferable as organic fillers.

As carbon black, only if there is no such problem as dispersion instability in the resin composition constituting the relief-forming layer, any of carbon blacks usually used for various applications such as coloring, rubber and dry battery is used, in addition to products falling within standards classified by ASTM.

The carbon black cited here also includes, for example, furnace black, thermal black, channel black, lampblack, acetylene black, etc.

In the present invention, it is also possible to use carbon blacks having a relatively low specific surface area and relatively low DBP (Dibutyl phthalate) absorption, and microfabricated carbon blacks having a large specific surface area.

Examples of the favorable commercial products of carbon black include Printex U (registered trade mark), Printex A (registered trade mark) and Spezialschwarz 4 (registered trade mark) (all are manufactured by Degussa), SEAST 600 ISAF-LS (Tokai Carbon Co., Ltd.), Asahi #70 (N-300) (ASAHI CARBON CO., LTD.), KETJEN BLACK EC600JD (Lion Corporation), etc.

With regard to the selection of such carbon blacks, for example, "Carbon Black Handbook" edited by Carbon Black Association may be referred to.

The carbon black has preferably a spherical form. With regard to a primary particle diameter, greater than 20 nm but less than 80 nm is preferable, and greater than 25 nm but less than 70 nm is more preferable. Carbon blacks falling within the range can suppress aggregation and are excellent in dispersibility.

Examples of the inorganic fillers include alumina, titania, zirconia, kaolin, calcined kaolin, talc, pagodite, diatomite, calcium carbonate, aluminum hydroxide, magnesium hydroxide, zinc oxide, lithopone, amorphous silica, colloidal silica, calcined gypsum, silica, magnesium carbonate, titanium oxide, alumina, barium carbonate, barium sulfate, mica, etc.

Among them, silica and alumina are preferable, silica is more preferable and sperical silica is yet more preferable.

The form of the filler used in the present invention is not particularly limited, but a spherical form, a layered form, a fibrous form and a hollow balloon form may be cited. Among these, a spherical form and a layered form are preferable, and a spherical form is more preferable.

An average particle diameter (average primary particle diameter) of fillers used in the present invention is preferably 10 nm to 10 µm, more preferably 10 nm to 5 µm, and particularly preferably 50 nm to 3 µm. The diameter in the above-mentioned range makes the stability of the resin composition good, and can suppress the generation of film omission after engraving to thus make the image quality excellent.

As silica used in the present invention, spherical silica particles are preferable, and commercial products shown below are exemplified preferably. Numerals in parentheses denote the average particle diameter.

Specific examples of products by EVONIK INDUSTRIES include AEROSIL RM50 (40 nm), R711 (12 nm), R7200 (12 nm), AEROSIL OX50 (40 nm), 50 (30 nm), 90G (20 nm), 130 (16 nm), 150 (14 nm), 200 (12 nm), 200 CF (12 nm), 300 (7 nm) and 380 (7 nm).

Specific examples of products by AGC Si-Tech. Co., Ltd. include SUNSPHERE H-31 (3 µm), H-51 (5 µm), H-121 (12 µm), H-201 (20 µm), SUNSPHERE L-31 (3 µm), L-51 (5 µm), SUNSPHERE NP-30 (4 µm), NP-100 (10 µm) and NP-200 (20 µm).

Specific examples of products by Nissan Chemical Industries, Ltd. include methanol silica sol (10 to 20 nm), MA-ST-M (10 to 20 nm), IPA-ST (10 to 20 nm), EG-ST (10 to 20 nm), EG-ST-ZL (70 to 100 nm), NPC-ST (10 to 20 nm), DMAC-ST (10 to 20 nm), MEK-ST (10 to 20 nm), XBA-ST (10 to 20 nm) and MIBK-ST (10 to 20 nm).

Furthermore, the inorganic filler is preferably porous particles or nonporous particles.

The porous particles referred to here are defined as particles having micropores having a pore volume of at least 0.1 mL/g in the particle or particles having microcavities.

The porous particles preferably have a specific surface area of at least 10 m²/g but no greater than 1,500 m²/g, an average pore diameter of at least 1 nm but no greater than 1,000 nm, a pore volume of at least 0.1 mL/g but no greater than 10 mL/g, and an oil adsorption of at least 10 mL/100 g but no greater than 2,000 mL/100 g. The specific surface area is determined based on the BET method from a nitrogen adsorption isotherm at -196°C. Furthermore, it is preferable to use a nitrogen adsorption method for measurement of the pore volume and the average pore diameter. Measurement of oil adsorption may desirably be carried out in accordance with JIS-K5101.

The number-average particle size of the porous particles is preferably at least 0.01 µm but no greater than 10 µm, more preferably at least 0.5 µm but no greater than 8 µm, and yet more preferably at least 1 µm but no greater than 5 µm.

The shape of the porous particles is not particularly limited, and spherical, flat-shaped, needle-shaped, or amorphous particles, or particles having projections on the surface, etc. may be used.

Furthermore, particles having a cavity in the interior, spherical granules having a uniform pore diameter such as a silica sponge, etc. may be used. Examples thereof are not particularly limited but include porous silica, mesoporous silica, a silica-zirconia porous gel, porous alumina, and a porous glass. Furthermore, as for a layered clay compound, pore diameter cannot be defined for those having a cavity of a few nm to a few hundred nm between layers, and in the present embodiment the distance between cavities present between layers is defined as the pore diameter.

Moreover, particles obtained by subjecting the surface of porous particles to a surface modifying treatment by covering with a silane coupling agent, a titanium coupling agent, or another organic compound so as to make the surface hydrophilic or hydrophobic may also be used. With regard to these porous particles, one type or two or more types may be selected.

The nonporous particles are defined as particles having a pore volume of less than 0.1 mL/g. The number-average particle size of the nonporous particles is the number-average particle size for primary particles as the target, and is preferably at least 10 nm but no greater than 500 nm, and more preferably at least 10 nm but no greater than 100 nm.

The amount of filler added in the sheet-shaped resin and the cylindrical resin is preferably 0.5 to 20 mass% relative to the total solids content (the amount excluding volatile components such as solvent), more preferably 1 to 15 mass%, and particularly preferably 3 to 10 mass%.

### <Photothermal conversion agent>

The sheet-shaped resin and the cylindrical resin preferably comprise a photothermal conversion agent.

Furthermore, the resin composition used in the present invention preferably comprises a photothermal conversion agent.

It is surmised that the photothermal conversion agent adsorbs laser light to thus generate heat, thereby promoting thermal decomposition of a cured material at the time of laser engraving. Because of this, it is preferable to select a photothermal conversion agent that absorbs light at the wavelength of the laser used for engraving.

With regard to carbon black or various types of pigment or dye in the filler described above, those functioning also as photothermal conversion agents are included.

When the cylindrical printing plate precursor of the present invention is subjected to laser engraving using a laser emitting infrared at 700 to 1,300 nm (a YAG laser, a semiconductor laser, a fiber laser, a surface emitting laser, etc.) as a light source, it is preferable to use as a photothermal conversion agent a compound that can absorb light at a wavelength of 700 to 1,300 nm.

In the present invention, as the photothermal conversion agent that can absorb light having a wavelength at 700 to 1,300 nm, various dyes and pigments can be used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 to 1,300 nm, and preferable examples include azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, and phthalocyanine-based colorants are preferably used. Examples include dyes described in paragraphs 0124 to 0137 of JP-A-2008-63554.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saishin Ganryo Ouyogijutsu' (Latest Applications of Pigment Technology) (CMC Publishing, 1986), and 'Insatsu Inki Gijutsu' (Printing Ink Technology) (CMC Publishing, 1984). Examples of pigments include pigments described in paragraphs 0122 to 0125 of JP-A-2009-178869.

Among these pigments, carbon black is preferable.

Carbon black not only has a function as the filler but also has a function as a photothermal conversion agent that can absorb light having a wavelength at 700 to 1,300 nm, and is preferably used in the present invention. Examples of carbon black include those described in paragraphs 0130 to 0134 of JP-A-2009-178869, and those described as fillers can also preferably be used.

The photothermal conversion agent in the resin composition of the present invention may be used singly or in a combination of two or more compounds.

The total content of the photothermal conversion agent in the sheet-shaped resin and the cylindrical resin of the present invention may vary greatly with the magnitude of the molecular extinction coefficient inherent to the molecule, but the content is preferably 0.01 to 30 mass%, more preferably 0.05 to 20 mass%, and particularly preferably 0.1 to 10 mass%, relative to the total solids content.

The content of the photothermal conversion agent in the resin composition for laser engraving of the present invention may vary greatly with the magnitude of the molecular extinction coefficient inherent to the molecule, but the content is preferably 0.01 to 30 mass%, more preferably 0.05 to 20 mass%, and particularly preferably 0.1 to 10 mass%, relative to the total mass total solids content.

### <Plasticizer>

The sheet-shaped resin and the cylindrical resin may comprise a plasticizer.

Furthermore, the resin composition of the present invention may comprise a plasticizer.

The plasticizer has the function of softening a film formed from the sheet-shaped resin, the cylindrical resin, or the resin composition and it is essential for it to be compatible with the binder polymer.

Preferred examples of the plasticizer used include dioctyl phthalate, didodecyl phthalate, bisbutoxyethyl adipate, a polyethylene glycol, and polypropylene glycol (monool type or diol type).

With regard to the plasticizer in the resin composition of the present invention, one type may be used on its own, or two or more types may be used in combination.

From the viewpoint of maintaining flexible film physical properties, the content of the plasticizer in the sheet-shaped resin and the cylindrical resin is preferably no greater than 50 mass% of the total solids content, more preferably no greater than 30 mass%, and yet more preferably no greater than 10 mass%, and it is particularly preferable that none is added.

Furthermore, from the viewpoint of maintaining flexible film physical properties, the content of the plasticizer in the resin composition of the present invention is preferably no greater than 50 mass% of the total solids content, more preferably no greater than 30 mass%, and yet more preferably no greater than 10 mass%, and it is particularly preferable that none is added.

### <Other additives>

The sheet-shaped resin and the cylindrical resin may comprise various types of additives as appropriate in a range that does not impair the effect of the present invention.

Furthermore, the resin composition used in the present invention may comprise various types of additives as appropriate in a range that does not impair the effect of the present invention. Examples include a wax, a metal oxide, an antiozonant, an antioxidant, a thermal polymerization inhibitor, a colorant, and a fragrance, and one type thereof may be used on its own or two or more types thereof may be used in combination.

### <Disposition step>

The process for producing a cylindrical printing plate precursor of the present invention comprises (ii) a disposition step of disposing on the outer periphery of a cylindrical support a cylindrical resin formed into a cylindrical shape by joining opposite end parts of the sheet-shaped resin.

In the disposition step, either one of said joining of opposite end parts of the sheet-shaped resin or said disposing on the outer periphery of a cylindrical support may be carried out prior to the other. For example, in the disposition step, end parts may be joined together after the sheet-shaped resin is disposed on the outer periphery of the cylindrical support, or the cylindrical support may be inserted into the interior of the cylindrical resin formed into a cylindrical shape by joining end parts thereof together for it to thus be disposed on the outer periphery of the cylindrical support. Furthermore, in the disposition step, there may or may not be a gap between the cylindrical support and the cylindrical resin disposed on the outer periphery thereof, but from the viewpoint of thickness precision, it is preferable for there to be a gap in at least part thereof. Moreover, the cylindrical support and the cylindrical resin disposed on the outer periphery thereof in the disposition step may be in contact with each other, or at least part thereof may be in contact.

Preferred examples of a joining method include a method in which bonding is carried out by heating and fusing (thermal fusion) and a method in which bonding is carried out using an adhesive. When joining is carried out by thermal fusion, it is preferable to use the thermally fusible particles described above.

The thickness of the sheet-shaped resin and cylindrical resin is preferably at least 0.05 mm but no greater than 10 mm, more preferably at least 0.05 mm but no greater than 7 mm, and yet more preferably at least 0.05 mm but no greater than 3 mm.

A material and a structure used for the cylindrical support are not particularly limited as long as it can be mounted on a printing cylinder. Examples include a cylinder made of metal, rubber, or plastic, or a hollow cylindrical support such as a sleeve made of metal, plastic, or fiber-reinforced plastic, and from the viewpoint of weight and ease of handling a hollow cylindrical support is preferable.

Examples of the material forming the metal cylinder or the metal sleeve include aluminum, nickel, iron, and an alloy thereof.

Examples of the material forming the plastic cylinder or the plastic sleeve include polyester, polyimide, polyamide, polyphenylene ether, polyphenylene thioether, polysulfone, and an epoxy resin.

Examples of the fiber material forming the fiber-reinforced plastic sleeve include a polyester fiber, a polyimide fiber, a polyamide fiber, a polyurethane fiber, a cellulose fiber, a glass fiber, a metal fiber, a ceramic fiber, and a carbon fiber.

Examples of the material forming the rubber cylinder include ethylenepropylene-diene (EPDM) rubber, fluorine rubber, silicone rubber, styrene-butadiene (SB) rubber, and urethane rubber.

When the cylindrical support is a hollow cylindrical support, the thickness of the hollow cylindrical support is preferably at least 0.2 mm but no greater than 2 mm, more preferably at least 0.3 mm but no greater than 1.5 mm, and yet more preferably at least 0.4 mm but no greater than 1 mm. When the thickness of the hollow cylindrical support is within this range, mounting thereof on an air cylinder is easy and sufficient mechanical strength can be maintained without bending or cracking.

Optionally, an adhesive may be applied on the sheet-shaped resin or cylindrical resin and/or the cylindrical support so as to form an adhesive layer between the sheet-shaped resin and the cylindrical support after the shrinkage step, which is described later. The adhesive may have the same formulation as that of the sheet-shaped resin or may have a different formulation therefrom.

An outer face of the cylindrical support may be subjected to a physical and/or chemical treatment in order to promote adhesion between the cylindrical support and the sheet-shaped resin. Examples of the physical treatment method include a sandblasting method, a wet blasting method in which a liquid containing particles is sprayed, a corona discharge treatment method, a plasma treatment method, and a UV or vacuum UV irradiation method. Examples of the chemical treatment method include a strong acid/strong alkali treatment method, an oxidizing agent treatment method, and a coupling agent treatment method.

### <Shrinkage step>

The process for producing a cylindrical printing plate precursor of the present invention comprises (iii) a shrinkage step of shrinking the cylindrical resin so as to be in intimate contact with the cylindrical support.

In the shrinkage step, it is preferable to dispose the cylindrical resin, which has been formed into a cylindrical shape, on the outer periphery of the cylindrical support, and then subject it to heating and shrinking. The resin composition and the cylindrical support can be put into intimate contact with each other by shrinkage.

Shrinkage in the shrinkage step is preferably shrinkage by removal of solvent remaining in the cylindrical resin or volume shrinkage by radical polymerization.

Preferred examples of a method for removing solvent remaining in the cylindrical resin include a method in which solvent is volatilized by reducing the pressure and a method in which solvent is removed by heating, and a method in which solvent is removed by heating is more preferable in terms of simplicity of equipment.

Examples of a method for heating and shrinking include a method in which hot air is blown, a method involving retention in a heated atmosphere such as in an oven, a method involving irradiation with heat rays such as infrared, and a method involving contact with a heated cylinder or flat plate.

The temperature for heating and shrinking is preferably at least 50°C but no greater than 120°C, more preferably at least 60°C but no greater than 100°C, and most preferably at least 65°C but no greater than 85°C.

As a method for carrying out shrinkage by radical polymerization, a method involving heating or a method involving irradiation with light is suitably used. As equipment and a method used for heating, the same method as for removing solvent by heating described above may suitably be used. Examples of a light source used for irradiation with light include a high-pressure mercury lamp, an ultra high-pressure mercury lamp, a UV fluorescent lamp, a germicidal lamp, a carbon arc lamp, a xenon lamp, and a metal halide lamp. The light with which the resin composition is irradiated is preferably light having a wavelength at 200 to 400 nm. Since many hydrogen-abstracting photopolymerization initiators have high absorbance in this wavelength region, when there is light having a wavelength at 200 to 400 nm, it is possible to ensure sufficient curability for the surface of the cured resin material. One type of light source may be used for photocuring, but it is also preferable to use two or more light sources since the curability of a resin can be improved by curing using two or more types of light sources having different wavelengths.

The shrinkage ratio of the cylindrical resin in the shrinkage step is preferably at least 0.1 % but no greater than 10% in terms of the peripheral length of the cylinder, more preferably at least 0.5% but no greater than 5%, and most preferably at least 1% but no greater than 3%. With this range, adhesion between the cylindrical resin and the cylindrical support is sufficient, and the occurrence of breakage of the cylindrical resin during shrinkage can be suppressed.

Furthermore, the thickness of the cylindrical resin after the shrinkage step is preferably at least 0.05 mm but no greater than 10 mm, more preferably at least 0.05 mm but no greater than 7 mm, and yet more preferably at least 0.05 mm but no greater than 3 mm.

### <Crosslinking step>

The process for producing a cylindrical printing plate precursor of the present invention preferably comprises a crosslinking step of forming a crosslinked structure in the sheet-shaped resin or the cylindrical resin by thermally crosslinking the sheet-shaped resin or the cylindrical resin, and more preferably comprises a crosslinking step of forming a crosslinked structure in the sheet-shaped resin by thermally crosslinking the sheet-shaped resin. When a crosslinked structure is present in the resin layer (relief-forming layer) of the cylindrical printing plate precursor, it is easy to handle the cylindrical printing plate precursor, printing durability in the cylindrical printing plate obtained is excellent, the relief formed after laser engraving becomes sharp and, furthermore, the tackiness of engraving residue formed during laser engraving is suppressed.

Examples of heating means in the crosslinking step include a method in which heating is carried out in a hot air oven or a far-infrared oven for a predetermined time and a method involving contact with a heated roll for a predetermined time.

The solvent content in the sheet-shaped resin after the crosslinking step is preferably 1 to 30 mass% relative to the total solids content, more preferably 1 to 20 mass%, and yet more preferably 3 to 10 mass%. When in this range, shrinkage in the shrinkage step is sufficient, adhesion to the cylindrical support is excellent, deformation of the sheet-shaped resin or the cylindrical resin can be suppressed due to the strength thereof being sufficient, and a cylindrical printing plate having high thickness precision can be made.

Furthermore, the process for producing a cylindrical printing plate precursor of the present invention may comprise a known step other than those described above.

Examples thereof include a step of coating the sheet-shaped resin or the cylindrical resin and/or the cylindrical support with an adhesive.

### (Cylindrical printing plate and process for making same)

The process for making a cylindrical printing plate of the present invention comprises a plate making step of subjecting the cylindrical printing plate precursor the present invention or a cylindrical printing plate precursor obtained by the process for producing a cylindrical printing plate precursor of the present invention to plate making, and the plate making step is preferably an engraving step of laser-engraving the cylindrical printing plate precursor of the present invention or a cylindrical printing plate precursor obtained by the process for producing a cylindrical printing plate precursor of the present invention to thus form a relief layer.

The cylindrical printing plate of the present invention is a cylindrical printing plate obtained from the cylindrical printing plate precursor of the present invention or a cylindrical printing plate precursor obtained by the process for producing a cylindrical printing plate precursor of the present invention, and is preferably a cylindrical printing plate obtained by laser-engraving the cylindrical printing plate precursor of the present invention or a cylindrical printing plate precursor obtained by the process for producing a cylindrical printing plate precursor of the present invention.

### <Engraving step>

The process for making a cylindrical printing plate of the present invention preferably comprises an engraving step of laser-engraving the cylindrical printing plate precursor of the present invention or a cylindrical printing plate precursor obtained by the process for producing a cylindrical printing plate precursor of the present invention to thus form a relief layer.

The engraving step is a step of laser-engraving a resin layer (relief-forming layer) of the cylindrical printing plate precursor to thus form a relief layer. Specifically, it is preferable to engrave the relief-forming layer by irradiation with laser light according to a desired image, thus forming a relief layer. Furthermore, a step in which the relief-forming layer is subjected to scanning irradiation by controlling a laser head using a computer in accordance with digital data of a desired image can preferably be cited. Moreover, the relief-forming layer preferably has a crosslinked structure.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraving being carried out. The advantage of laser engraving is that, since the depth of engraving can be set freely, it is possible to control the three-dimensional structure. For example, for an area where fine halftone dots are printed, carrying out engraving in a shallow manner or with a shoulder prevents the relief from collapsing due to printing pressure, and for a groove area where a fine outline character is printed, carrying out engraving deeply makes the groove resistant to becoming blocked with ink, thus enabling breakup of an outline character to be suppressed.

In particular, when the resin composition comprises a photothermal conversion agent that has absorbance in the infrared wavelength region, such as carbon black, it becomes possible to selectively remove the crosslinked relief-forming layer at higher sensitivity when engraving is carried out using an infrared laser, thus giving a relief layer having a sharp image.

As the infrared laser used in the engraving step, from the viewpoint of productivity, cost, etc., a carbon dioxide laser (a CO₂ laser) or a semiconductor laser is preferable. In particular, a fiber-coupled semiconductor infrared laser (FC-LD) is preferably used. In general, compared with a CO₂ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is yet more preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, Applied Laser Technology, The Institute of Electronics and Communication Engineers, etc.

Moreover, as plate making equipment comprising a fiber-coupled semiconductor laser that can be used suitably in the process for making a cylindrical printing plate of the present invention, those described in detail in JP-A-2009-172658 and JP-A-2009-214334 can be cited. Such equipment comprising a fiber-coupled semiconductor laser can be used to produce a flexographic printing plate of the present invention.

The process for producing a cylindrical printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid comprising water as a main component.

Drying step: a step of drying the engraved relief layer.

Post-crosslinking step: a step of further crosslinking the relief layer by applying energy to the engraved relief layer.

After the above-mentioned step, since engraved residue is attached to the engraved surface, a rinsing step of washing off engraved residue by rinsing the engraved surface with water or a liquid comprising water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraved residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13.2, and yet more preferably no greater than 13, and especially preferably no greater than 12.5. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid may comprise a surfactant.

From the viewpoint of removability of engraved residue and little influence on a flexographic printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, and nonionic surfactants. Moreover, a fluorine-based or silicone-based nonionic surfactant may also be used in the same manner.

With regard to the surfactant, one type may be used on its own or two or more types may be used in combination.

Examples of surfactant include those described in JP-A-2011-063013 and JP-A-2011-152719, and those described as fillers can also preferably be used.

It is not necessary to particularly limit the amount of surfactant used, but it is preferably 0.01 to 20 mass% relative to the total weight of the rinsing liquid, and more preferably 0.05 to 10 mass%.

The present invention is explained in further detail below by reference to Examples, but the present invention should not be construed as being limited to these Examples.

### (Example 1)

A three-necked flask equipped with a stirring blade and a condenser was charged with 50 parts by mass of 'Denka Butyral #3000-2' (polyvinyl butyral derivative, Mw = 90,000, Denki Kagaku Kogyo Kabushiki Kaisha) as a polymer and 47 parts by mass of propylene glycol monomethyl ether acetate as a solvent, and the polymer was dissolved by heating at 70°C for 120 minutes while stirring. Subsequently, the solution was set at 40°C, and 33 parts by mass of NK Ester DCP (tricyclodecanedimethanol dimethacrylate, Shin-Nakamura Chemical Co., Ltd.) as a polymerizable compound, 1.6 parts by mass of *t*-butyl peroxybenzoate (product name: Perbutyl Z, NOF Corporation) as a polymerization initiator, and 1 part by mass of Ketjen Black EC600JD (carbon black, Lion Corporation) as a photothermal conversion agent were further added thereto and stirring was carried out for 30 minutes. Subsequently, 15 parts by mass of KBE-846 (Shin-Etsu Chemical Co., Ltd.) and 0.4 parts by mass of diazabicycloundecene as an alcohol exchange reaction catalyst were added and stirring was carried out at 40°C for 10 minutes. This procedure gave flowable coating solution 1 for a crosslinkable relief-forming layer (crosslinkable resin composition for laser engraving).

A spacer (frame) having a predetermined thickness was placed on a PET substrate, and coating solution 1 for a crosslinkable relief-forming layer obtained above was gently cast into the spacer (frame) so that it did not overflow therefrom and dried in an oven at 70°C for 3 hours to thus produce sheet-shaped resin 1 having a thickness of about 1 mm (preparation step).

After part of sheet-shaped resin 1 was sampled and heated at 120°C for 1 hour, the amount of residual solvent calculated from the reduction in mass was 7 mass% relative to the total solids content.

Sheet-shaped resin 1 was cut into a width of 180 mm and a length of 725 mm, and wrapped around a fiber-reinforced plastic sleeve (AKL, Germany) having an inner diameter of 226.12 mm, a thickness of 0.45 mm, and a width of 200 mm, the area between the end parts was filled with coating solution 1, hot air at 70°C was blown onto the area thus filled for 3 hours, and it was then polished using sandpapers No. 100, No. 400, and No. 1000 in sequence until the joint became invisible, thus giving cylindrical printing plate precursor preform 1 (disposition step). The amount of solvent remaining in cylindrical printing plate precursor preform 1 was the same as the amount of solvent remaining in sheet-shaped resin 1. Cylindrical printing plate precursor preform 1 was heated in an oven at 75°C for 6 hours and shrunk by removing the solvent (shrinkage step), thus giving cylindrical printing plate precursor 1.

The surface of cylindrical printing plate precursor 1 obtained was engraved using laser recording equipment provided with an SDL-6390 fiber-coupled semiconductor laser (FC-LD) (wavelength: 915 nm, JDSU) having a maximum output of 8.0 W under conditions of a scanning speed of 1,300 mm/sec and a pitch setting of 2,400 DPI to give recessed and raised lines having a width of 100 µm at intervals of 100 µm in a 1 cm square.

### (Example 2)

70 parts by mass of a polycarbonate polyurethane having a number-average molecular weight of about 100,000 ('Resamine (registered trademark) P890', thermoplastic elastomer, Dainichiseika Color & Chemicals Mfg. Co., Ltd.), 30 parts by mass of phenoxyethyl methacrylate, 1 part by mass of trimethylolpropane trimethacrylate, 5 parts by mass of porous fine powder silica ('Sylosphere (registered trademark) C-1504', number-average particle size 4.5 µm, specific surface area 520 m²/g, average pore diameter 12 nm, pore volume 1.5 mL/g, loss on ignition 2.5 mass%, oil adsorption 290 mL/100 g, Fuji Silysia Chemical Ltd.) as inorganic particles, 0.5 parts by mass of benzophenone and 0.6 parts by mass of 2,2-dimethoxy-2-phenylacetophenone as photopolymerization initiators, and 0.5 parts by mass of 2,6-di-*t*-butylacetophenone as a stabilizer were mixed at a temperature of 130°C using a kneader ('D1-5', Moriyama), thus preparing resin composition 2. The resin composition thus obtained was extruded at a thickness of 0.4 mm onto PET using a twin screw extruder ('KZW-TW', Technovel Corporation), thus forming sheet-shaped resin 2 (preparation step).

Sheet-shaped resin 2 was cut into a width of 180 mm and a length of 720 mm, and wrapped around a fiber-reinforced plastic sleeve (AKL, Germany) having an inner diameter of 226.12 mm, a thickness of 0.45 mm, and a width of 200 mm, and opposite end parts were thermally fused at 130°C and polished, thus giving cylindrical printing plate precursor preform 2 (disposition step). Cylindrical printing plate precursor preform 2 was, while rotating, exposed to the light of a metal halide lamp ('F450V model UV lamp', Fusion) under conditions of 4,000 mJ/cm² when measured using an actinometer having a sensitivity central wavelength of 350 nm ('M02 + UV35', ORC Manufacturing Co., Ltd.) to thus photocure the photosensitive resin composition, thereby effecting volume shrinkage by curing and radical polymerization (shrinkage step).

An asperity pattern was formed on the surface of the cylindrical printing plate precursor using a carbon dioxide laser engraving machine (ZED-mini-1000, ZED, UK; Coherent, USA, equipped with a carbon dioxide laser with an output of 250 W, laser emission wavelength 10.6 µm) and used in flexographic printing.

Engraving was carried out by forming a halftone pattern (120 lines/inch, percentage area 10%).

### (Example 3)

58.3 parts by mass of Kraton (registered trademark) D1102 (polystyrene-polybutadiene-polystyrene block copolymer, thermoplastic elastomer, Kraton Polymer), 13.9 parts by mass of NissoPB-1000 (1,2-polybutadiene, Nippon Soda Co., Ltd.), 14.6 parts by mass of Polyoil 130 (liquid polybutadiene oil, Evonik), 10.0 parts by mass of 1,6-hexamethylenediol diacrylate, 1.0 parts by mass of butylhydroxytoluene, 2.0 parts by mass of IRGACURE (registered trademark) 651 (phenylacetophenone, Ciba-Geigy), 0.234 parts by mass of hydroxyethyl methacrylate, and 0.006 parts by mass of Red Dye 346 (BASF) were mixed by a heated mixer at 150°C for 15 minutes, and the molten material was extruded at a thickness of 0.4 mm on PET using a twin screw extruder ('KZW-TW', Technovel Corporation), thus forming sheet-shaped resin 3 (preparation step).

Sheet-shaped resin 3 was cut into a width of 180 mm and a length of 720 mm, and wrapped around a fiber-reinforced plastic sleeve (AKL, Germany) having an inner diameter of 226.12 mm, a thickness of 0.45 mm, and a width of 200 mm, and opposite end parts were thermally fused at 150°C and polished, thus giving cylindrical printing plate precursor preform 3 (disposition step). Cylindrical printing plate precursor preform 3 was, while rotating, exposed to the light of a metal halide lamp ('F450V model UV lamp', Fusion) under conditions of 4,000 mJ/cm² when measured using an actinometer having a sensitivity central wavelength of 350 nm ('M02 + UV35', ORC Manufacturing Co., Ltd.) to thus photocure the photosensitive resin composition, thereby effecting volume shrinkage by curing and radical polymerization (shrinkage step).

An asperity pattern was formed on the surface of the cylindrical printing plate precursor using a carbon dioxide laser engraving machine in the same manner as in Example 2 and used in flexographic printing.

### (Example 4)

Sheet-shaped resin 4 was obtained in the same manner as in Example 1 except that 7.5 parts by mass of particles of a styrene/acrylonitrile copolymer with a ratio by mass of 60/40 (average particle size 50 nm, thermally fusible particles) was added to coating solution 1 (preparation step).

Sheet-shaped resin 4 was cut into a width of 180 mm and a length of 720 mm, and wrapped around a fiber-reinforced plastic sleeve (AKL, Germany) having an inner diameter of 226.12 mm, a thickness of 0.45 mm, and a width of 200 mm, and opposite end parts were thermally fused to each other at 150°C and polished, thus giving cylindrical printing plate precursor preform 4 (disposition step). Cylindrical printing plate precursor preform 4 was heated in an oven at 75°C for 6 hours and shrunk by removing the solvent (shrinkage step), thus giving cylindrical printing plate precursor 4.

The surface of cylindrical printing plate precursor 4 obtained was engraved using laser recording equipment provided with an SDL-6390 fiber-coupled semiconductor laser (FC-LD) (wavelength: 915 nm, JDSU) having a maximum output of 8.0 W under conditions of a scanning speed of 1,300 mm/sec and a pitch setting of 2,400 DPI to give recessed and raised lines having a width of 100 µm at intervals of 100 µm in a 1 cm square.

### (Comparative Example 1)

Sheet-shaped resin 5 was obtained by heating sheet-shaped resin 1 as it was in the sheet shape in an oven at 75°C for 6 hours (preparation step). Sheet-shaped resin 5 was cut into a width of 180 mm and a length of 710 mm, and wrapped around a fiber-reinforced plastic sleeve (AKL, Germany) having an inner diameter of 226.12 mm, a thickness of 0.45 mm, and a width of 200 mm, the area between end parts was filled with coating solution 1, hot air at 90°C was blown onto the area thus filled for 3 hours, and it was then polished, thus giving cylindrical printing plate precursor 5 (disposition step only).

The surface of cylindrical printing plate precursor 5 thus obtained was engraved in the same manner as in Example 1 using laser recording equipment provided with a fiber-coupled semiconductor laser.

### (Example 5)

Sheet-shaped resin 6 was obtained in the same manner as in Example 1 except that when forming sheet-shaped resin 1 drying was carried out at 60°C for 3 hours (preparation step). The amount of residual solvent was 12 mass%. Sheet-shaped resin 6 was cut into a width of 180 mm and a length of 745 mm, and wrapped around a fiber-reinforced plastic sleeve (AKL, Germany) having an inner diameter of 226.12 mm, a thickness of 0.45 mm, and a width of 200 mm, the area between end parts was filled with coating solution 1, hot air at 70°C was blown thereonto for 3 hours, and it was then polished, thus giving cylindrical printing plate precursor preform 6 (disposition step). The amount of solvent remaining in cylindrical printing plate precursor preform 6 was the same as the amount of solvent remaining in sheet-shaped resin 6. Cylindrical printing plate precursor preform 6 was heated in an oven at 75°C for 6 hours and shrunk by removing the solvent (shrinkage step), thus giving cylindrical printing plate precursor 6.

The surface of cylindrical printing plate precursor 6 was engraved in the same manner as in Example 1 using laser recording equipment provided with a fiber-coupled semiconductor laser.

### (Example 6)

Coating solution 4 for a crosslinkable relief-forming layer and sheet-shaped resin 7 were obtained in the same manner as in Example 1 except that in the formation of sheet-shaped resin 1 the polymerizable compound was changed to NK Ester A-DPH (dipentaerythritol hexaacrylate, Shin-Nakamura Chemical Co., Ltd.) (preparation step). Sheet-shaped resin 7 was cut into a width of 180 mm and a length of 745 mm, and wrapped around a fiber-reinforced plastic sleeve (AKL, Germany) having an inner diameter of 226.12 mm, a thickness of 0.45 mm, and a width of 200 mm, the area between end parts was filled with coating solution 4, hot air at 70°C was blown thereonto for 3 hours, and it was then polished, thus giving cylindrical printing plate precursor preform 7 (disposition step). Cylindrical printing plate precursor preform 7 was heated in an oven at 75°C for 6 hours and shrunk by removing the solvent (shrinkage step), thus giving cylindrical printing plate precursor 7.

The surface of cylindrical printing plate precursor 7 was engraved in the same manner as in Example 1 using laser recording equipment provided with a fiber-coupled semiconductor laser.

### <Evaluation of thickness precision>

Thickness precision was evaluated by measuring the difference between the maximum diameter and the minimum diameter for the outer diameter of a cylindrical printing plate precursor using a laser interferometer ('LS-5120', Keyence Corporation) for five positions on the same circumference and five positions in the major axis direction. The evaluation results are summarized in Table 1.

**Table 1**

| | Thickness precision |
|---|---|
| Example 1 | 40 µm |
| Example 2 | 40 µm |
| Example 3 | 40 µm |
| Example 4 | 40 µm |
| Example 5 | 70µm |
| Example 6 | 70 µm |
| Comparative Example 1 | 200 µm |

## Claims

1. A process for producing a cylindrical printing plate precursor, comprising in this order
(i) a preparation step of preparing a sheet-shaped resin,
(ii) a disposition step of disposing on the outer periphery of a cylindrical support a cylindrical resin formed into a cylindrical shape by joining opposite end parts of the sheet-shaped resin, and
(iii) a shrinkage step of shrinking the cylindrical resin so as to be in intimate contact with the cylindrical support.

2. The process for producing a cylindrical printing plate precursor according to Claim 1, wherein joining of opposite end parts in the disposition step is carried out by thermal fusion.

3. The process for producing a cylindrical printing plate precursor according to Claim 1 or 2, wherein the shrinkage ratio of the cylindrical resin in the shrinkage step is at least 0.1% but no greater than 10% of the circumference of the cylinder.

4. The process for producing a cylindrical printing plate precursor according to any one of Claims 1 to 3, wherein the sheet-shaped resin and the cylindrical resin comprise a thermoplastic elastomer.

5. The process for producing a cylindrical printing plate precursor according to any one of Claims 1 to 4, wherein the sheet-shaped resin comprises thermally fusible particles.

6. The process for producing a cylindrical printing plate precursor according to any one of Claims 1 to 5, wherein the cylindrical resin in the shrinkage step comprises a solvent, and
said shrinkage is shrinkage due to removal of the solvent.

7. The process for producing a cylindrical printing plate precursor according to Claim 6, wherein the content of the solvent in the cylindrical resin is 1 to 30 mass% relative to the total solids content of the cylindrical resin.

8. The process for producing a cylindrical printing plate precursor according to any one of Claims 1 to 5, wherein the cylindrical resin in the shrinkage step comprises an ethylenically unsaturated compound and a radical polymerization initiator, and
said shrinkage is volume shrinkage due to radical polymerization.

9. The process for producing a cylindrical printing plate precursor according to Claim 8, wherein the ethylenically unsaturated compound comprises a polyfunctional ethylenically unsaturated compound.

10. The process for producing a cylindrical printing plate precursor according to any one of Claims 1 to 9, wherein the sheet-shaped resin and the cylindrical resin have a thickness of at least 0.05 mm but no greater than 10 mm.

11. The process for producing a cylindrical printing plate precursor according to any one of Claims 1 to 10, wherein the sheet-shaped resin and the cylindrical resin comprise a photothermal conversion agent.

12. The process for producing a cylindrical printing plate precursor according to any one of Claims 1 to 11, wherein the cylindrical printing plate precursor is a cylindrical printing plate precursor for laser engraving.

13. The process for producing a cylindrical printing plate precursor according to any one of Claims 1 to 12, wherein the cylindrical printing plate precursor is a cylindrical flexographic printing plate precursor.

14. A process for making a cylindrical printing plate, comprising an engraving step of laser engraving the cylindrical resin of a cylindrical printing plate precursor produced by the process according to any one of Claims 1 to 13 to thus form a relief layer.
